# FASCICULE DE BREVET EUROPEEN

(11) **EP 2 935 127 B1**
(45) Date de publication et mention de la délivrance du brevet: **24.08.2016**
(21) Numéro de dépôt: 13829062.2
(22) Date de dépôt: 20.12.2013
(51) Int. Cl.: C02F 1/467

(54) **PROCEDE DE DESINFECTION ELECTROCHIMIQUE DES EAUX**
ELEKTROCHEMISCHE VERFAHREN ZUR WASSERDESINFIZIERUNG
ELECTROCHEMICAL METHOD FOR WATER DISINFECTION

(30) Priorité: 21.12.2012 FR 1203545
(43) Date de publication de la demande: 28.10.2015
(73) Titulaire: Société Européenne de Traitement des Eaux, 66250 Saint-Laurent-de-la-Salanque (FR)
(72) Inventeur: MORALES, Jean-Marie, F-66570 Saint Nazaire (FR); MORALES, Stéphane, F-66440 Torreilles (FR); GINESTET, Didier, F-66250 Saint Laurent de la Salanque (FR)
(74) Mandataire: Gosse, Michel
(86) Numéro de dépôt international: PCT/FR2013/000363
(87) Numéro de publication internationale: WO 2014/096575

(56) Documents cités:
- EP-A1- 0 001 285
- EP-A1- 0 322 478
- DE-A1- 19 633 342
- GB-A- 761 016
- US-B1- 6 495 052

## Description

### DOMAINE DE L'INVENTION

L'invention concerne un procédé de désinfection électrochimique des eaux, sans ajout de produit chimique, par le passage de celles-ci dans au moins une cellule électrolytique contenue dans un boîtier pourvu de moyens d'amenée et d'évacuation des eaux et par l'exploitation de l'effet direct virucide, bactéricide et bactériostatique lié aux actions d'oxydation à l'anode et de réduction à la cathode et de l'effet indirect bactéricide complémentaire et bactériostatique rémanent lié à l'action des oxydants générés par l'électrolyse de l'eau.

### EXPOSE DE L'ARRIERE PLAN TECHNOLOGIQUE

Le brevet EP1597202 du même déposant décrit un procédé :
- consistant à faire passer l'eau à traiter en continu au travers d'un module d'électroperoxydation utilisant des électrodes catalytiques afin d'y subir un traitement électrochimique ;
- utilisant, d'une part, l'effet direct lié aux actions d'oxydation à l'anode et de réduction à la cathode sur les matières organiques dissoutes (effets virucide, bactéricide et bactério-statique) et d'autre part, l'effet indirect lié à l'action des oxydants générés par l'électrolyse de l'eau (effet bactéricide complémentaire et effet bactériostatique rémanent) ;
- permettant, par contact prolongé avec les oxydants générés par voie électrochimique, un abattement supplémentaire des bactéries et une protection de l'eau durant le transport et le stockage jusqu'aux points d'usage, l'action se prolongeant à la sortie de l'électrolyseur (pouvoir de désinfection rémanent).

Les oxydants générés à partir de l'oxygène dissous (réduction cathodique) et de l'eau (oxydation anodique), possèdent un effet rémanent appréciable et induit des produits d'oxydation à des taux inoffensifs, contrairement aux oxydants les plus utilisés comme le chlore.

Le dispositif pour la mise en oeuvre dudit procédé comportait une anode et une cathode en forme de plaques, parallèles entre elles, dont les faces catalytiques en regard sont symétriques et ont des superficies identiques, dans le but de permettre l'inversion des polarités dans de meilleures conditions (la densité de courant étant identique sur les deux électrodes) avec pour effet d'éviter une dégradation prématurée de l'une par rapport à l'autre du fait de la décarbonatation qui ne serait pas identique et des réactions secondaires qui seraient plus importantes sur l'électrode de plus petites dimensions (densité de courant plus forte).

Les conditions de fonctionnement appliquées audit dispositif, étaient les suivantes :
- mise en oeuvre d'un régime de circulation laminaire continu entre les deux électrodes en regard dans le but de limiter les turbulences qui favorisent l'accroche des dépôts de calcaire (incrustants) sur ou entre les électrodes qui ont pour effet de produire un vieillissement prématuré de celles-ci ;
- alimentation des anodes et des cathodes en opposition, par un courant électrique continu et/ou pulsé, dans le but de compenser les variations de la densité de courant d'une extrémité à l'autre de chaque électrode.

Lors d'essais de qualification en conditions réelles, il a été constaté que certaines bactéries étaient moins ou même peu affectées par le passage entre les électrodes. Parmi celles-ci on peut citer les bactéries Pseudomonas Aeruginosa et Clostridium Perfrigens.

Le rendement du traitement bactéricide s'est donc avéré peu performant en régime laminaire principalement pour les bactéries susmentionnées.

En fait, en régime laminaire, la lame d'eau qui traverse la cellule de part et d'autre, à égale distance de l'anode et de la cathode, subit uniquement l'effet lié au passage du courant entre les électrodes (via le transfert d'électrons entre anions et/ou cations et les électrodes).

### RESUME DE L'INVENTION

C'est dans le but d'accroître le rendement du traitement bactéricide, principalement pour les bactéries Pseudomonas Aeruginosa et Clostridium Perfrigens, que le déposant a mis au point le procédé revendiqué qui utilise également une cellule électrochimique comportant une anode et une cathode en forme de plaques, parallèles entre elles, dont les faces catalytiques en regard ont des superficies identiques et forment un espace inter-électrodes symétrique sans trajet préférentiel et court-circuit.

Partant du résultat de ses recherches basées sur le constat que le potentiel d'Hydrogène (pH), traduisant l'acidité de l'eau, est très bas (inférieur à 1) au voisinage de l'anode (siège de l'oxydation) et au contraire très haut (supérieur à 14) au voisinage de la cathode (siège de la réduction), que le déposant a mis en oeuvre un régime hydraulique turbulent spécifique entre les électrodes en regard de manière à :
- faire subir, de manière alternative et successive, aux micro-organismes présents dans l'eau, tout le long de leur passage dans la cellule, de fortes variations de pH dans le but de les désactiver ;
- mettre, de manière alternative et successive, lesdits micro-organismes en contact très rapproché avec les radicaux O₂ et OH formés à la surface des électrodes dans le but d'améliorer les effets directs et indirects.

De plus, le champ électrique entre les électrodes étant de l'ordre de la dizaine de volts, rapporté au niveau des membranes bactériennes il est suffisant pour induire un « claquage diélectrique ».

Le fonctionnement de la cellule dans ce régime turbulent, constitue une réelle avancée dans les performances du système, autorisant dès lors des essais sur des microorganismes plus évolués comme les protozoaires (amibes par exemple), champignons et levures.

Pour optimiser les performances de traitement, notamment de désinfection, le déposant a constaté que la mise en place, dans le flux aval, de pièces métalliques, notamment en cuivre, en contact avec l'eau, avait pour effet d'accélérer, par la formation de composés radicalaires puissants à faible durée de vie, les vitesses de décomposition des composés oxydants générés par le système hydrique (formation de composés radicalaires puissants à faible durée de vie).

Quant à l'entartrage des électrodes et du circuit hydrique, il a été limité par la maitrise du pouvoir entartrant de l'eau en amont de la cellule en utilisant au moins l'une des technologies suivantes :
- rétention sélective des cations de calcium et magnésium sur résine échangeuse de cations ;
- séquestration des ions calcium par contact avec des polyphosphates sous la forme cristaux ou sous forme liquide ;
- inhibition du pouvoir incrustant du calcaire (carbonate de calcium) par l'action d'antitartre magnétique, inductif ou équivalent.

### PRESENTATION DES FIGURES

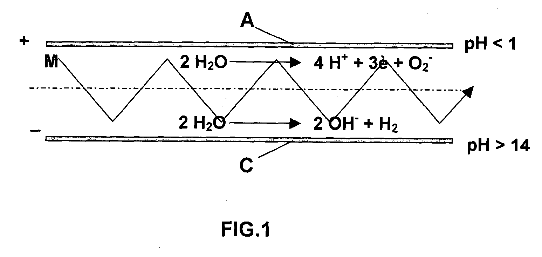

Les caractéristiques et les avantages de l'invention vont apparaître plus clairement à la lecture de la description détaillée qui suit d'au moins un mode de réalisation préféré de celle-ci donné à titre d'exemple non limitatif et du dessin annexé (Fig.1) qui est un schéma de principe du cheminement des microorganismes entre les électrodes et des réactions chimiques au voisinage de celles-ci.

### DESCRIPTION DETAILLEE DE L'INVENTION

L'invention concerne un procédé de désinfection électrochimique des eaux par le passage de celles-ci dans au moins une cellule électrolytique contenue dans un boîtier pourvu de moyens d'amenée et d'évacuation desdites eaux et par l'exploitation de l'effet direct virucide, bactéricide et bactériostatique lié aux actions d'oxydation à l'anode et de réduction à la cathode et de l'effet indirect bactéricide complémentaire et bactériostatique rémanent lié à l'action des oxydants générés par l'électrolyse de l'eau.

Le procédé selon l'invention se caractérise essentiellement en ce qu'il consiste :
a) à utiliser une cellule électrolytique qui comporte une anode et une cathode en forme de plaques, parallèles entre elles, dont les faces catalytiques en regard ont des superficies identiques et forment un espace inter-électrodes symétrique sans trajet préférentiel et court-circuit ;
b) à créer, entre lesdites plaques, au moyen d'un dispositif placé en amont ou en aval de celles-ci, tout au long du passage des eaux à traiter, un régime turbulent ayant pour effet de projeter, de manière alternative et successive, sur l'anode et sur la cathode, les microorganismes contenus dans les matières dissoutes afin de leur faire subir l'effet désactivant provoqué par les fortes variations de pH existant entre les électrodes ainsi que l'effet bactéricide complémentaire au contact des radicaux O₂ et OH formés à la surface des électrodes.

La figure 1 met en évidence :
- l'anode A (pH<1) et la cathode C (pH>14)
- le cheminement des microorganismes M entre lesdites deux électrodes ;
- la réaction chimique à l'anode : 2 H₂O = 4 H⁺ + 3è + O₂⁻
- la réaction chimique à la cathode : 2 H₂O = 2 OH⁻ + H₂

Le procédé, selon l'invention, consiste, en addition, pour optimiser les performances de traitement, notamment de désinfection, à placer, dans le flux aval, des pièces métalliques, notamment en cuivre, en contact avec l'eau, afin d'accélérer, par la formation de composés radicalaires puissants à faible durée de vie, les vitesses de décomposition des composés oxydants générés par le système hydrique.

Il consiste, également en addition, pour inhiber l'entartrage des électrodes et du circuit hydrique, à appliquer, en amont de celui-ci, une technologie choisie parmi :
- la rétention sélective des cations de calcium et de magnésium sur résine échangeuse de cations ;
- la séquestration des ions de calcium par contact avec des polyphosphates sous la forme de cristaux ou sous la forme liquide ;
- l'inhibition du pouvoir incrustant du carbonate de calcium par l'action d'antitartre magnétique ou inductif.

Il consiste, également en addition, pour nettoyer les électrodes, à leur appliquer :
- soit un champ ultrasonique ;.
- soit un champ hautes fréquences générant des phénomènes de résonnances.

Le dispositif pour la mise en oeuvre dudit procédé comporte des perturbateurs de flux comme par exemple :
- à l'entrée des cellules, un générateur de turbulences pourvu d'une série de déflecteurs montés en opposition et supportés par une bague cylindrique qui vient s'emboîter sur la buse d'entrée de la cellule électrolytique ;
- sur les bords d'attaque des plaques, pour accroître le régime de turbulence entre les plaques, des profils en « U » emboîtables.

Le rôle d'un système de désinfection est de maintenir des concentrations suffisantes en désinfectants oxydants dans l'eau qui circule dans le réseau interne de distribution afin que les bactéries, qui se trouvent en suspension dans l'eau (en provenance du réseau d'eau froide de la ville, de bras morts ou de bio-films en place), soient détruites ou désactivées avant leur arrivée aux points de puisage. L'assurance d'utiliser une eau de qualité conforme à son usage implique donc de vérifier dans l'espace et le temps la présence d'une concentration suffisante au niveau des points de puisage, les valeurs cibles mesurées en équivalent chlore étant comprises entre 0,5 et 1 mg/l.

Le principe d'électrolyse mis en oeuvre permet de produire des désinfectants oxydants à partir de l'oxygène présent dans l'eau.

Une étude interne a montré que la rémanence des oxydants générés par le procédé selon l'invention tendait vers une évolution logarithmique du temps de rémanence fonction de la concentration initiale en oxydants. Par exemple la durée de vie est d'environ 24 heures pour une concentration initiale de 0,5 mg/l et passe à 30 heures pour 1 mg/l. Elle est de 15 jours pour 2,5 mg/l et plus d'un mois (31 jours) pour 10 mg/l.

La cellule d'électrolyse est généralement associée à un débitmètre (à palette, à émetteur d'impulsion ou autre) et d'un coffret électronique qui gère la régulation du courant électrique envoyé à la cellule en fonction du débit passant et des réglages adoptés par l'opérateur.

Selon deux variantes de d'exploitation de l'invention, plusieurs cellules peuvent être montées, hydrauliquement :
- soit en série afin de cumuler leurs effets désinfectants ;
- soit en parallèle afin de cumuler leurs débits.

Les cellules peuvent être, dans ces deux cas, contenues dans un boîtier commun pourvu de moyens d'amenée et d'évacuation également communs à l'ensemble desdites cellules.

Les cellules peuvent être montées hydrauliquement en série ou en parallèle mais pas nécessairement électriquement, chaque cellule pouvant être alimentée séparément.

Selon diverses variantes d'exploitation de l'invention, un module de traitement électrochimique peut être :
a) immergé dans un réservoir de traitement ou de décantation ;
b) placé sur la boucle d'un réservoir de traitement ou de décantation ;
c) couplé à un système de filtration, notamment des types granulaires, ou à membranes, et/ou à un autre module de traitement électro-chimique.

La ou les cellules peuvent être alimentées en courant continu et/ou pulsé. L'inversion de polarité des électrodes est programmée selon un pourcentage bien déterminé de l'élévation de la tension fonction des caractéristiques de l'eau à traiter et/ou selon une temporisation bien déterminée en fonction de la qualité de l'eau. L'espace existant entre deux électrodes est généralement compris entre 2 et 6 mm en fonction des conductivités des eaux utilisées.

Les électrodes ont des épaisseurs généralement comprises entre 1 et quelques mm.

Les modules de traitement électrochimique peuvent comporter, 2, 4, 6 ou plus d'électrodes.

Le courant continu et/ou pulsé utilisé a une valeur généralement comprise entre 1 et 10 A par dm².

La pression optimale de l'eau dans la cellule est de 3 bars.

Lorsque les cellules sont montées en boucle sur une cuve, elles produisent un volume d'eau à une concentration d'oxydants totaux plus importante, par exemple pour protéger l'eau traitée contre toute recontamination par des germes et/ou des matières organiques dans les stockages et réseaux de distribution et ce jusqu'aux points d'usage. Cette eau pourra ensuite être injectée sur l'eau à traiter, dans cette application seul l'effet indirect est utilisé.

Cette mise en oeuvre peut être utilisée pour désinfecter des appareils par exemples chirurgicaux, par immersion dans la cuve décrite ci-dessus.

Le système peut également être utilisé comme traitement tertiaire des eaux usées ou comme traitement principal ou secondaire des eaux à vocation ludique ou thérapeutiques (eaux thermales, thalassothérapie,...).

Pour les applications cités ci-dessus ainsi que pour la décontamination des eaux de tours de refroidissement ou tout autre système de traitement de l'air, la mise en oeuvre pourra être différente dans le cas où les jeux d'électrodes seront nus (non enfermés dans une cellule).

La masse liquide pourra être alors mise en contact avec les oxydants générés par mouvements convectifs (phénomènes de convection). Ce type de mise en oeuvre pourra être adopté par exemple dans les bacs tampons et les réservoirs d'eau. Plusieurs jeux d'électrodes pourront être mises en oeuvre dans une même cuve. Les jeux d'électrodes pourront également être mises en oeuvre intégrés à l'intérieur ou à l'extérieur de tuyaux et baignant dans l'eau à traiter (par exemple pour les bassins dans le réseau de recyclage de l'eau).

Les eaux traitées par le dispositif, quel que soit le type de mise en oeuvre, peuvent éventuellement être utilisées pour des applications médicales (thérapies).

Lorsque cette technique est couplée à un système de filtration granulaire, une synergie des technique s'opère puisque la microfiltration arrête totalement les parasites et bactéries mais pas les virus alors que le dispositif participe à la destruction des virus.

De plus le dispositif amène un pouvoir de désinfection rémanent à l'eau que ne peut pas apporter la microfiltration ou l'irradiation aux ultra-violets.

Enfin le dispositif participe à la dégradation des matières organiques dissoutes alors que la microfiltration n'arrête que les matières en suspension (particules supérieures à 0.1 microns, ou 0.01 microns pour l'ultrafiltration).

Bien entendu, l'homme de métier sera apte à réaliser l'invention telle que décrite et représentée en appliquant et en adaptant des moyens connus sans qu'il soit nécessaire de les décrire ou de les représenter.

Il pourra également prévoir d'autres variantes sans pour cela sortir du cadre de l'invention tel que déterminé par la teneur des revendications.

## Revendications

1. Procédé, de désinfection électrochimique des eaux par le passage de celles-ci dans une cellule électrolytique contenue dans un boîtier pourvu de moyens d'amenée et d'évacuation des eaux ;
**caractérisé en ce qu'**il consiste :
a) à utiliser une cellule électrolytique constituée d'une anode et d'une cathode en forme de plaques, parallèles entre elles, dont les faces catalytiques en regard ont des superficies identiques et forment un espace inter-électrodes symétrique sans trajet préférentiel et sans court-circuit ;
b) à placer, en amont ou en aval desdites plaques, un générateur de turbulences, constitué d'une série de déflecteurs montés en opposition et supportés par une bague cylindrique qui vient s'emboîter sur la buse correspondante de la cellule électrolytique, apte à créer entre celles-ci, tout au long du passage des eaux à traiter, un régime turbulent ayant pour effet de projeter, de manière alternative et successive, sur l'anode, qui possède, dans son voisinage, un pH inférieur à 1, et sur la cathode, qui possède, dans son voisinage, un pH supérieur à 14, les micro-organismes contenus dans les matières dissoutes.

2. Procédé, selon la revendication 1, **caractérisé en ce qu'**il consiste, pour optimiser les performances de traitement, notamment de désinfection, à placer, dans le flux aval, des pièces métalliques, notamment en cuivre, en contact avec l'eau, afin d'accélérer, par la formation de composés radicalaires puissants à faible durée de vie, les vitesses de décomposition des composés oxydants générés par le système hydrique.

3. Procédé, selon la revendication 1, **caractérisé en ce qu'**il consiste, pour inhiber l'entartrage des électrodes et du circuit hydrique, à appliquer, en amont de celui-ci, une technologie choisie parmi :
- la rétention sélective des cations de calcium et de magnésium sur résine échangeuse de cations ;
- la séquestration des ions de calcium par contact avec des polyphosphates ;
- l'inhibition du pouvoir incrustant du carbonate de calcium par l'action d'antitartre magnétique ou inductif.

4. Procédé, selon la revendication 1, **caractérisé en ce qu'**il consiste, pour nettoyer les électrodes, à leur appliquer un champ ultrasonique.

5. Procédé, selon la revendication 1, **caractérisé en ce qu'**il consiste, pour nettoyer les électrodes, à leur appliquer un champ hautes fréquences générant des phénomènes de résonnances.

## Patentansprüche

1. Verfahren zur elektrochemischen Desinfektion von Wasser durch den Durchgang desselben durch mindestens einer Elektrolysezelle, die in einem Gehäuse enthalten ist, das mit Mitteln zur Zuführung und zur Entfernung von Wasser ausgestattet ist;
**dadurch gekennzeichnet, dass** es darin besteht:
a) eine Elektrolytzelle zu verwenden, die eine Anode und eine Kathode in Form von Platten umfasst, die zueinander parallel sind, dessen gegenüber liegenden katalytischen Seiten identische Oberflächen aufweisen und einen symmetrischen Raum zwischen den Elektroden ohne bevorzugten Weg und Kurzschluss umfassen.
b) vorgelagert oder nachgelagert von den Platten einen Turbulenzgenerator anzuordnen, der aus einer Reihe von Deflektoren besteht, die einander gegenüber liegend und getragen von einem zylindrischen Ring, der auf die entsprechende Düse der Elektrolysezelle passt, montiert sind, dazu in der Lage, zwischen diesen entlang des Durchgangs des zu behandelnden Wassers einen wirbelnden Zustand zu erzeugen, der bewirkt, dass auf alternative und aufeinander folgende Weise auf die Anode, die in ihrer Umgebung einen pH-Wert von weniger als 1 aufweist, und auf die Kathode, die in ihrer Umgebung einen pH-Wert von mehr als 14 aufweist, die Mikroorganismen zu projizieren, die in den gelösten Materialien enthalten sind.

2. Verfahren nach Anspruch 1, **dadurch gekennzeichnet, dass** es darin besteht, für die Optimierung der Leistungen der Behandlung, insbesondere der Desinfizierung, im nachgelagerten Strom Metallteile, insbesondere aus Kupfer, in Kontakt mit dem Wasser anzuordnen, um, durch die Bildung von starken Radikalverbindungen mit niedriger Lebensdauer die Geschwindigkeiten der Zersetzung der oxidierenden Verbindungen, die durch das Wassersystem erzeugt werden, zu beschleunigen.

3. Verfahren nach Anspruch 1, **dadurch gekennzeichnet, dass** es darin besteht, für die Hemmung der Ablagerung der Elektroden und des Wasserkreislaufs vorgelagert von diesem eine Technologie anzuwenden, ausgewählt aus:
- der selektiven Rückhaltung der Calzium- und Magnesiumkationen auf Kationenaustauschharz;
- der Sequestrierung der Calziumionen durch Kontakt mit Polyphosphaten;
- der Hemmung des Inkrustationsvermögens des Calciumcarbonats durch die Einwirkung von magnetischen oder induktiven Ablagerungshemmern.

4. Verfahren nach Anspruch 1, **dadurch gekennzeichnet, dass** es darin besteht, für die Reinigung der Elektroden auf diese ein Ultraschallfeld anzuwenden.

5. Verfahren nach Anspruch 1, **dadurch gekennzeichnet, dass** es darin besteht, für die Reinigung der Elektroden auf diese ein Hochfrequenzfeld anzuwenden, das Resonanzphänomene erzeugt.

## Claims

1. Method for the electrochemcial disinfection of water by passing the latter through at least on electrolytic cell contained in a housing provided with means for feeding and discharging the water:
**characterised in that** it consists of:
a) using an electrolytic cell that comprises an anode and a cathode in the form of plates, parallel to each other, the opposite catalytic faces of which have identical surfaces and form a symmetrical inter-electrode space without any preferential path and short-circuit;
b) placing, upstream and downstream of said plates, a turbulence generator, consisting of a series of deflectors mounted in opposition and supported by a cylindrical ring that fits onto the corresponding nozzle of the electrolytic cell, able to create between them, throughout the passage of the water to be treated, a turbulent regime having the effect of projecting the microorganisms contained in the dissolved materials, alternately and successively, onto the anode, which has, in its vicinity, a pH of less than 1, and onto the cathode, which has, in its vicinity, a pH greater than 14.

2. Method according to claim 1, **characterised in that** it consists, for optimising the treatment performances, in particular of disinfection, of placing, in the downstream flow, metal pieces, in particular made from copper, in contact with the water, in order, by the formation of powerful radical compounds with a short life, to accelerate the decomposition rates of the oxidising compounds generated by the water system.

3. Method according to claim 1, **characterised in that** it consists, for inhibiting the furring of the electrodes and of the water circuit, of applying, upstream of the latter, a technology chosen from:
- the selective retention of the calcium and magnesium cations on a cation-exchange resin;
- sequestration of the calcium ions by contact with polyphosphates;
- inhibition of the furring capacity of the calcium carbonate by magnetic or inductive anti-furring action.

4. Method according to claim 1, **characterised in that** it consists, for cleaning the electrodes, of applying an ultrasonic field to them.

5. Method according to claim 1, **characterised in that** it consists, for cleaning the electrodes, of applying to them a high-frequency field generating resonance phenomena.
